# EUROPÄISCHE PATENTSCHRIFT

(11) **EP 3 523 257 B1**
(45) Veröffentlichungstag und Bekanntmachung des Hinweises auf die Patenterteilung: **20.12.2023**
(21) Anmeldenummer: 17784170.7
(22) Anmeldetag: 04.10.2017
(51) Int. Cl.: C03B 20/00, C03B 19/06, B33Y 10/00

(54) **VERFAHREN ZUR HERSTELLUNG EINES FORMKÖRPERS AUS HOCHREINEM, TRANSPARENTEM QUARZGLAS MITTELS ADDITIVER FERTIGUNG**
METHOD FOR PRODUCING A BODY OF HIGHLY PURE, TRANSPARENT QUARTZ GLASS BY MEANS OF ADDITIVE MANUFACTURING
PROCÉDÉ DE FABRICATION D'UN OBJET DE VERRE DE SILICE DE GRANDE PURETÉ PAR FABRICATION ADDITIVE

(30) Priorität: 06.10.2016 DE 102016012003
(43) Veröffentlichungstag der Anmeldung: 14.08.2019
(73) Patentinhaber: Karlsruher Institut für Technologie, 76131 Karlsruhe (DE)
(72) Erfinder: RAPP, Bastian, 76135 Karlsruhe (DE); KOTZ, Frederik, DE-76137 Karlsruhe (DE)
(74) Vertreter: Müller-Boré & Partner Patentanwälte PartG mbB
(86) Internationale Anmeldenummer: PCT/EP2017/001169
(87) Internationale Veröffentlichungsnummer: WO 2018/065093

(56) Entgegenhaltungen:
- EP-A1- 2 452 965
- US-B1- 6 355 587
- FREDERIK KOTZ ET AL: "Liquid Glass: A Facile Soft Replication Method for Structuring Glass", ADVANCED MATERIALS, Bd. 28, Nr. 23, 1. Juni 2016 (2016-06-01), Seiten 4646-4650, XP055440193, DE ISSN: 0935-9648, DOI: 10.1002/adma.201506089
- MACIEJ WOZNIAK ET AL: "Rheology of UV curable colloidal silica dispersions for rapid prototyping applications", JOURNAL OF THE EUROPEAN CERAMIC SOCIETY, ELSEVIER SCIENCE PUBLISHERS, BARKING, ESSEX, GB, Bd. 31, Nr. 13, 5. Mai 2011 (2011-05-05), Seiten 2221-2229, XP028241319, ISSN: 0955-2219, DOI: 10.1016/J.JEURCERAMSOC.2011.05.004 [gefunden am 2011-05-25]
- GURR M ET AL: "Acrylic nanocomposite resins for use in stereolithography and structural light modulation based rapid prototyping and rapid manufacturing technoloiges", ADVANCED FUNCTIONAL MATERIALS, WILEY - V C H VERLAG GMBH & CO. KGAA, DE, vol. 18, no. 16, 22 August 2008 (2008-08-22), pages 2390-2397, XP001515250, ISSN: 1616-301X, DOI: 10.1002/ADFM.200800344
- Carola Esposito Corcione ET AL: "Free form fabrication of silica moulds for aluminium casting by stereolithography", Rapid Prototyping Journal, vol. 12, no. 4, 1 August 2006 (2006-08-01) , pages 184-188, XP055201330, ISSN: 1355-2546, DOI: 10.1108/13552540610682688

## Beschreibung

Die vorliegende Erfindung betrifft ein Verfahren zur Herstellung eines Formkörpers aus hochreinem, transparentem Quarzglas mittels additiver Fertigung.

Verfahren zur additiven Fertigung von dreidimensionalen Strukturen weisen gegenüber herkömmlichen Herstellungsverfahren den Vorteil auf, dass sie keiner vorgefertigten Matrix bedürfen, welche den anzufertigenden Körper bereits geometrisch vorgibt. Durch die frei wählbare dreidimensionale Formgebung lassen sich in der additiven Fertigung spezifische Kundenwünsche kostengünstig umsetzen wie auch Prototypen preiswert und schnell herstellen. Daher werden die in der additiven Fertigung angewandten Herstellungsverfahren auch Rapid Prototyping-Prozesse (RP-Prozesse) genannt.

Die im Stand der Technik beschriebenen additiven Fertigungsverfahren sind vornehmlich für die Herstellung von Polymerbauteilen geeignet. Ausnahmen bilden Ansätze auf der Grundlage von selektivem Lasersintern, bei denen auch metallische und keramische Materialien wie Aluminiumoxid zum Einsatz kommen können. Was die Herstellung von frei strukturierbaren Glaskörpern anbelangt, ist beispielsweise ein selektives Lasersinterverfahren bekannt, welches das lokale Aufschmelzen von Quarzglasnanopartikeln in einem Pulverbad und deren Verdichten zu einem Glaskörper vorsieht, wie beispielsweise in US 2004/0118158 A1 beschrieben. Nachteilig an diesem Verfahren sind jedoch die hierbei erforderlichen hohen Prozesstemperaturen und die hierdurch entstehenden apparativen Anforderungen. Darüber hinaus ist es mit diesem Verfahren nur bedingt möglich, Glasbauteile in Freiform herzustellen, da während des Fertigungsprozesses ein signifikanter Schrumpf auftritt, der sich punktuell auf das entstehende Glasbauteil auswirkt. Folglich weisen die so erhaltenen Glasformkörper einen starken lokalen Verzug sowie hohe Eigenspannungen auf. Ferner ist die Oberflächenqualität der mit diesem Verfahren erhaltenen Glasbauteile meist unzureichend, da das selektive Lasersintern zu einer hohen Rauigkeit und damit zu einer geringen optischen Transparenz führt.

Ein anderer Ansatz zur additiven Fertigung von Glasbauteilen ist ein RP-Prozess, welcher an das als Schmelzschichtung (Fused Deposition Modeling, FDM) bekannte Verfahren angelehnt ist. Das für die Herstellung von Glasbauteilen modifizierte FDM-Verfahren, welches in US 2015/0307385 A1 beschrieben ist, verwendet als Substrat einen Glasstrang anstelle eines polymeren Filaments. In einer Hochtemperaturdüse wird der Glasstrang aufgeschmolzen und im Raum appliziert. Das Aufschmelzen des Glasstranges kann nach Luo et al. (Journal of Manufacturing Science and Engineering 2014, 136, 061024) dabei auch mittels eines Lasers erfolgen. Durch gezieltes räumliches Verfahren der Hochtemperaturdüse wird so eine dreidimensionale Glasstruktur geformt und schließlich das gewünschte Glasbauteil nach Abkühlung erhalten. Allerdings ist die ursprüngliche Fadenstruktur des Glasstranges im so erhaltenen Glasformkörper noch sichtbar. Ferner ist die mit dem vorstehend beschriebenen Verfahren erreichbare Detailauflösung begrenzt, was eine hohe Oberflächenrauigkeit und somit eine geringe Oberflächengüte zur Folge hat.

Im Stand der Technik sind schließlich noch weitere Verfahren zur Herstellung von Formkörpern aus Glas bekannt. Verschiedentlich wird hier auch die Strukturgebung des Glasformkörpers beschrieben. Nicht selten ist die Prozessierung von Glas dabei auf Hochtemperaturprozesse beschränkt, wobei technischen Gläsern zum Herabsetzen der Schmelztemperaturen große Mengen Kristallbildner zugemischt werden. Diese Gläser verlieren dadurch meist die hohe optische Transmission bis weit in den UV-Bereich, welche von Quarzgläsern bekannt ist.

In US 2015/0224575 A1 ist ein 3D-Druck-Verfahren beschrieben, bei dem eine gemischte thermoplastische Matrix zum Einsatz kommt. Diese besteht aus zwei Komponenten, welche bei unterschiedlichen Temperaturen thermisch entfernt bzw. zersetzt werden können. Das Vorgehen basiert hierbei auf der Vorlage eines organischen Binders in Form eines Thermoplasts, der selektiv mit photohärtender Tinte beaufschlagt wird, wodurch eine lokale Strukturierung möglich ist. Nachteilig an diesem Verfahren ist die Tatsache, dass ein sehr komplexes Bindersystem benötigt wird (d.h. zusätzlich zur UV-härtenden Tinte sind mindestens zwei Thermoplaste notwendig) und dass die mit dem klassischen 3D-Druck einhergehenden Nachteile wie hohe Rauigkeit und schlechte optische Transmission bestehen bleiben. Die optische und mechanische Güte der so erhaltenen Substrate ist daher gering.

Eine der wenigen Methoden transparente Gläser mittels eines pulverbasierten Ansatzes herzustellen ist in US 6,829,908 beschrieben. Allerdings muss hier zum Erreichen ausreichender Dichten der Glaskörper während des Sinterns unter Druck gesetzt werden, was die freie Formgebung nahezu unmöglich macht. Mitunter muss hier die thermische Behandlung auch in einer kontrollierten Atmosphäre wie beispielsweise unter Wasserstoff, beschrieben in US 6,576,578, oder entfeuchtenden reaktiven Gasen, beschrieben in US 5,679,125, durchgeführt werden. In US 4,849,001 ist ferner eine Verfahrensmodifikation dieses Ansatzes beschrieben. Zusätzlich wird hier eine organische Bindermatrix verwendet.

Zur Herstellung optisch hochreiner Bauteile sind im Stand der Technik Zonenziehverfahren beschrieben, beispielsweise in US 2016/0083303 A1. Diese Verfahren ermöglichen die Herstellung hochreiner Bauteile mit hoher optischer Transmission, allerdings sind sie auf relativ einfache geometrische Strukturen beschränkt. Dies liegt in der Natur des Verfahrens begründet: Beim Zonenziehen werden Bereiche des Bauteils selektiv verflüssigt, um die unterschiedliche Löslichkeit von Fremdatomen im festen bzw. im flüssigen Zustand auszunutzen. Durch die partielle Verflüssigung verliert das Bauteil lokal allerdings seine mechanische Festigkeit, wodurch filigrane Strukturen kollabieren. Darüber hinaus ist das Zonenziehen ein technisch vergleichsweise sehr aufwendiges Verfahren.

Pulverbasierte Prozesse sind im Stand der Technik prinzipiell bekannt, auch unter Verwendung von Verfahren wie beispielsweise dem 3D-Druck. Als Beispiel hierfür sei US 8,991,211 genannt. Mitunter müssen die hergestellten Bauteile während des Sinterns in einem inerten Pulver gestützt werden, damit sie ihre Form nicht einbüßen. Diese Ansätze sind zumeist nur für Kalk-Natron-Gläser beschrieben und damit nicht zur Erzeugung transparenter Quarzgläser geeignet.

Zwar sind im Stand der Technik Verfahren bekannt, mit denen die Herstellung von Gläsern hoher optischer Güte möglich ist, allerdings sind diese nicht zur freien dreidimensionalen Formgebung geeignet. Beispiele hierfür sind US 2010/0041538 A1 und US 2006/0137398 A1 zu entnehmen. Ferner beschreiben Wozniak et al. (Journal of the European Ceramic Society 2009, 29, 2259-2265) einen pulverbasierten Ansatz, der mittels Replikation die Herstellung eines milchig opaken Glasbauteils unter Verwendung einer photohärtbaren organischen Bindermatrix vorsieht. In ähnlicher Weise beschreiben Kotz et al. (Advanced Materials 2016, 28, 4646-4650) ein Verfahren, mit dem sich optisch hochreines Quarzglas erzeugen lässt. Allerdings sind beide vorstehend genannten Verfahren replikativer Natur und eignen sich daher nicht zur freien dreidimensionalen Formgebung von Quarzglas.

Wozniak et al. (Journal of the European Ceramic Society 2011, 31, 2221-2229) beschreiben ferner die rheologischen Eigenschaften von UV-härtbaren kolloidalen Siliziumdioxiddispersionen für Rapid Prototyping-Anwendungen.

Verschiedentlich sind im Stand der Technik Ansätze zur Herstellung von Quarzglaspartikeln und deren Verdichtung zu transparenten Gläsern beschrieben. Geeignete Herstellungsverfahren basieren dabei zumeist auf einer Flammenhydrolyse, wie beispielsweise in US 6,606,883 beschrieben. Solche Verfahren erlauben allerdings keine freie Formgebung.

US 2008/0196448 A1, EP 0 653 381 A1 und EP 1 210 294 A1 beschreiben jeweils ein Verfahren, bei dem eine Aufschlämmung aus Quarzglaspartikeln und Wasser hergestellt wird, welche in eine geeignete Form gegossen und anschließend geformt wird. Nach Extraktion des Wassers kann der so erhaltene Rohkörper gesintert werden. Das Verfahren erlaubt jedoch keine freie Formgebung in drei Dimensionen und die Aufschlämmung ist nicht direkt strukturierbar. Es handelt sich somit um ein Abformverfahren, das sich nicht für einen RP-Prozess eignet.

Eine weitere wichtige Gruppe von Methoden zur Herstellung von hochreinem Quarzglas sind Sol-Gel-Ansätze, bei denen SiO₂-Präkursoren (Alkoxy- oder Chlorsilane) Verwendung finden. Die Präkursoren werden dabei kondensiert und die bei der Kondensation entstehenden Nebenprodukte - oft ein Salz, Alkohol, Salzsäure (HCl) oder Wasser - extrahiert. Der Schrumpf dieser Ansätze ist meist erheblich, da große Massenanteile aus der Lösung entfernt werden. Häufig weisen die so erhaltenen Glasbauteile eine geringe Dichte auf, bedingt durch die poröse Hohlraumstruktur.

Zumeist erreichen die Komponenten auch nicht die von Quarzglas bekannten optischen und vor allem auch mechanischen Eigenschaften. Häufig muss bei sehr hohen Temperaturen im Bereich von 1500 bis 2200 °C gesintert werden, um den Gläsern eine ausreichende Dichte sowie entsprechende mechanische und optische Eigenschaften zu verleihen. Beispiele eines solchen Sol-Gel-Ansatzes sind in US 5,236,483 beschrieben.

Den vorstehend genannten Verfahren ist somit gemeinsam, dass sie sich nicht zur Herstellung von dreidimensional freigeformten Quarzglaskörpern mit hoher Strukturauflösung sowie gleichzeitig hoher optischer und mechanischer Güte eignen. Bisher ist es noch nicht gelungen, hochreine, transparente Quarzglasformkörper im Rahmen eines additiven Fertigungsprozesses zufriedenstellend herzustellen.

Der vorliegenden Erfindung liegt somit die Aufgabe zugrunde, ein additives Fertigungsverfahren bereitzustellen, welches die Herstellung eines dreidimensional freigeformten Körpers aus hochreinem, transparentem Quarzglas mit hoher Strukturauflösung sowie gleichzeitig hoher optischer und mechanischer Güte ermöglichen soll.

Diese Aufgabe wird durch die in den Ansprüchen gekennzeichneten Ausführungsformen der vorliegenden Erfindung gelöst.

Erfindungsgemäß wird ein Verfahren zur Herstellung eines Formkörpers aus hochreinem, transparentem Quarzglas bereitgestellt, wobei das erfindungsgemäße Verfahren die nachstehenden Schritte umfasst:
(a) Bereitstellen einer Zusammensetzung zur Herstellung eines Formkörpers aus hochreinem, transparentem Quarzglas in einer Vorrichtung, wobei die Zusammensetzung die nachstehenden Komponenten umfasst:
   mindestens einen polymerisierbaren organischen Binder, welcher in einem organischen Lösungsmittel gelöst ist;
   einen Polymerisationsstarter bzw. Vernetzer, der durch Zufuhr von Licht oder Wärme die Polymerisation oder Vernetzung des mindestens einen polymerisierbaren organischen Binders initiiert; und
   mindestens eine Art von kugelförmigen Quarzglaspartikeln, die in dem mindestens einen polymerisierbaren organischen Binder in dispergierter Form vorliegen und einen Durchmesser im Bereich von 7 bis 100 nm aufweisen;
(b) unvollständiges Aushärten des in der Zusammensetzung enthaltenen mindestens einen polymerisierbaren organischen Binders durch räumlich begrenzte Zufuhr von Licht oder Wärme, wodurch ein Grünling als Primärstruktur erhalten wird;
(c) Abtrennen des nicht-ausgehärteten, mindestens einen polymerisierbaren organischen Binders einschließlich der darin enthaltenen Komponenten von der Primärstruktur; und gegebenenfalls mindestens einmal Wiederholen der Schritte (a), (b) und (c);
(d) gegebenenfalls Nachbehandeln der Primärstruktur durch mindestens ein Verfahren, ausgewählt aus der Gruppe, bestehend aus Strukturieren mit Hilfe eines Formwerkzeuges, Bestrahlen mit hochenergetischer Strahlung und anschließendem Entwickeln, Fräsen, Bohren, Laminieren, Bonden, Schleifen, Polieren, Läppen, Gravieren und Behandeln mit Wärme oder Laserlicht;
(e) Entfernen einer gegebenenfalls in der Primärstruktur vorhandenen nicht-aushärtbaren Komponente;
(f) Entbindern der Primärstruktur durch thermische Behandlung, wodurch ein Braunling als poröse Sekundärstruktur erhalten wird;
(g) gegebenenfalls Auffüllen der porösen Sekundärstruktur mit mindestens einem Füllstoff; und
(h) Sintern der porösen Sekundärstruktur, wodurch der finale Formkörper erhalten wird.

Der mindestens eine polymerisierbare organische Binder liegt bei Raumtemperatur (20 °C) in flüssiger Form vor. In diesem Zusammenhang bedeutet das Vorliegen in flüssiger Form, dass der mindestens eine polymerisierbare organische Binder in einem geeigneten organischen Lösungsmittel gelöst ist. Als Lösungsmittel kommen hierbei beispielsweise aliphatische Alkohole, Ketone, Ether, Dimethylformamid und vergleichbare, dem Fachmann bekannte Lösungsmittel in Frage. Durch Zufuhr von Licht oder Wärme kann der mindestens eine polymerisierbare organische Binder durch Polymerisation oder Vernetzung ausgehärtet werden, wodurch eine feste Bindermatrix erhalten wird. Entsprechend verfügt der mindestens eine polymerisierbare organische Binder über geeignete funktionelle Gruppen, die einer Polymerisation zugänglich sind. Solche funktionelle Gruppen schließen auch Doppelbindungen ein. Ferner weist der mindestens eine polymerisierbare organische Binder die Eigenschaft auf, dass er sich im ausgehärteten Zustand bei erhöhter Temperatur, typischerweise im Bereich von 200 bis 700 °C, zersetzen lässt. Ansonsten unterliegt der mindestens eine polymerisierbare organische Binder erfindungsgemäß keinen weiteren Einschränkungen.

Gemäß der vorliegenden Erfindung schließt der mindestens eine polymerisierbare organische Binder vorzugsweise solche organische Verbindungen ein, die durch Polymerisation Thermoplaste ergeben. In einer Ausführungsform der vorliegenden Erfindung umfasst der mindestens eine polymerisierbare organische Binder solche Monomere, die keine vernetzten Polymere bzw. Copolymere erzeugen. Nicht einschränkend gehören hierzu Polyolefine wie beispielsweise Polyethylen, Polypropylen, Polystyrol, Polyvinylchlorid, Polymethylmethacrylat, Polyhydroxymethylmethacrylat, Polyhydroxymethylacrylat, Polyhydroxyethylmethacrylat, Polyhydroxyethylacrylat, Polyhydroxypropylmethacrylat, Polyhydroxypropylacrylat, Polyhydroxybutylmethacrylat, Polyhydroxybutylacrylat und Acrylnitril-Butadien-Styrol, Polycarbonate, Polyester wie beispielsweise Polylactat und Polyethylenterephthalat, Polyamide, Polyurethane, Polyetherketone wie beispielsweise Polyetheretherketon, Polyether und Polyarylate. Demgemäß kann der mindestens eine polymerisierbare organische Binder auch aus mehreren Monomerkomponenten bestehen.

In einer Ausführungsform der vorliegenden Erfindung ist der mindestens eine polymerisierbare organische Binder ein Monomer mit mindestens einer polymerisierbaren funktionellen Gruppe, beispielsweise ein Monoacrylat und/oder ein Diacrylat mit beliebiger Funktionalisierung. Umfasst die Zusammensetzung zur Herstellung eines Formkörpers aus hochreinem, transparentem Quarzglas sowohl ein Monoacrylat als auch ein Diacrylat, alternativ auch ein Tri-, Tetra-, Penta-, Hexa-, Hepta- oder Octaacrylat bzw. ein vergleichbares Monomer mit mehreren polymerisierbaren funktionellen Gruppen, als mindestens einen polymersierbaren organischen Binder, kann durch Einstellen der Stoffmengenanteile hiervon das Ausmaß von Vernetzungen in der ausgehärteten Bindermatrix kontrolliert werden.

Neben dem mindestens einen polymerisierbaren organischen Binder umfasst die in Schritt (a) des erfindungsgemäßen Verfahrens bereitgestellte Zusammensetzung zur Herstellung eines Formkörpers aus hochreinem, transparentem Quarzglas, im Folgenden lediglich als Zusammensetzung bezeichnet, einen Polymerisationsstarter bzw. Vernetzer, der durch Zufuhr von Licht oder Wärme die Polymerisation oder Vernetzung des mindestens einen polymerisierbaren organischen Binders initiiert.

Der Polymerisationsstarter bzw. Vernetzer unterliegt erfindungsgemäß keiner besonderen Einschränkung. Die Zusammensetzung kann einen beliebigen, vorzugsweise im Handel erhältlichen Polymerisationsstarter bzw. Vernetzer umfassen, sofern er durch photolytische oder thermolytische Spaltung polymerisations- oder vernetzungsinduzierende Moleküle erzeugen kann. Beispiele für Polymerisationsstarter bzw. Vernetzer in Form von Radikalinitiatoren, die sich mittels Licht aktivieren lassen, sind Azobis(isobutyronitril) und Benzoylperoxid, während beispielsweise 2,2-Dimethoxy-2-phenylacetophenon, Phenylbis(2,4,6-trimethylbenzoyl)-phosphinoxid, 2-Hydroxy-4'-(2-hydroxyethoxy)-2-methylpropiophenon und 2-Hydroxy-2-methylpropiophenon thermisch aktivierbare Radikalinitiatoren darstellen. Da sich die Zufuhr von Licht räumlich genauer begrenzen lässt als die Zufuhr von Wärme, umfasst die Zusammensetzung vorzugsweise einen mittels Licht aktivierbaren Polymerisationsstarter bzw. Vernetzer. Hierdurch lässt sich der in der Zusammensetzung enthaltene mindestens eine polymerisierbare organische Binder räumlich aufgelöst aushärten. Die für die photolytische bzw. thermolytische Spaltung des Polymerisationsstarters bzw. Vernetzers notwendige Wellenlänge bzw. Temperatur lässt sich insbesondere bei im Handel erhältlichen Polymerisationsstartern bzw. Vernetzern dem Stand der Technik entnehmen.

Weiterhin umfasst die Zusammensetzung mindestens eine Art von kugelförmigen Quarzglaspartikeln, die in dem mindestens einen polymerisierbaren organischen Binder, welcher bei Raumtemperatur flüssig ist, in dispergierter Form vorliegen und einen Durchmesser im Bereich von 7 bis 100 nm aufweisen. Die in der Zusammensetzung enthaltenen kugelförmigen Quarzglaspartikel bestehen aus hochreinem, amorphem Siliziumdioxid, d.h. der SiO₂-Massenanteil in den Quarzglaspartikeln ist mindestens bzw. ≥ 90%, bevorzugt mindestens bzw. ≥ 99% und besonders bevorzugt mindestens bzw. ≥ 99,9%. In diesem Zusammenhang ist der Begriff "kugelförmig" so aufzufassen, dass auch Quarzglaspartikel mit kugelartiger geometrischer Form mit eingeschlossen sind, also solche Quarzglaspartikel, die sphäroid sind. Der vorstehend definierte Durchmesserbereich ist dabei so zu verstehen, dass in keiner Dimension der Durchmesser der Quarzglaspartikel im Wesentlichen kleiner als 7 nm und größer als 100 nm ist.

Darüber hinaus kann die Zusammensetzung noch weitere Komponenten umfassen. In einer bevorzugten Ausführungsform der vorliegenden Erfindung umfasst die Zusammensetzung eine nicht-aushärtbare Komponente, welche nach dem Aushärten des mindestens einen polymerisierbaren organischen Binders als Mischphase in der Bindermatrix vorliegt. Unter einer nicht-aushärtbaren Komponente sind erfindungsgemäß solche Substanzen zu verstehen, die sich durch Zufuhr von Licht oder Wärme nicht polymerisieren lassen sowie ausreichend viskos sind, d.h. eine Viskosität von mindestens bzw. ≥ 5 mPa·s, bevorzugt von mindestens bzw. ≥ 15 mPa·s und besonders bevorzugt von mindestens bzw. ≥ 25 mPa·s bei Raumtemperatur aufweisen, gemessen in Übereinstimmung mit DIN 53019. Erfindungsgemäß liegt die nicht-aushärtbare Komponente demnach in fester oder in zähfließend flüssiger Form vor. Die chemische Natur der nicht-aushärtbaren Komponente ist ansonsten keinen weiteren Einschränkungen unterworfen. Beispiele für die nicht-aushärtbare Komponente sind Alkohole, Ether, Silikonöle oder vergleichbare organische Lösungsmittel oder Kombinationen hiervon, die ein ausreichend hohes Molekulargewicht und/oder entsprechende Funktionalisierungen aufweisen, um der vorstehend genannten Viskosität zu entsprechen. In einer weiteren bevorzugten Ausführungsform ist die nicht-aushärtbare Komponente ein Alkylarylether, der gegebenenfalls mit einer Hydroxygruppe funktionalisiert ist, beispielsweise Ethylenglycolmonophenylether. Der auch als Phenoxyethanol bezeichnete substituierte Alkylarylether weist eine Viskosität von 30 mPa·s bei 20 °C auf und liegt somit bei Raumtemperatur als zähfließende Flüssigkeit vor. Alternativ kann die nicht-aushärtbare Komponente bei Raumtemperatur in fester Form vorliegen. Die Viskosität von Feststoffen ist im Allgemeinen sehr hoch. Umfasst die Zusammensetzung eine nicht-aushärtbare Komponente in fester Form, so ist davon auszugehen, dass deren Viskosität mindestens bzw. ≥ 5 mPa·s beträgt. In einer Ausführungsform der vorliegenden Erfindung ist die nicht-aushärtbare Komponente in Form eines Feststoffes in dem mindestens einen polymerisierbaren organischen Binder löslich. Erfindungsgemäß weist die nicht-aushärtbare Komponente ferner die Eigenschaft auf, dass sie nach dem Aushärten des mindestens einen polymerisierbaren organischen Binders aus der Bindermatrix abgetrennt werden kann. Die Abtrennung kann beispielsweise durch eine thermische Behandlung erfolgen, woraufhin die nicht-aushärtbare Komponente entweder verdampft oder sublimiert, alternativ auch zersetzt wird. Beispielsweise lässt sich Phenoxyethanol unter Atmosphärendruck bei 242 °C verdampfen, wobei auf Grund des Dampfdrucks bereits bei Temperaturen ab 150 °C signifikante Mengen hiervon abgetrennt werden.

Als weitere Komponente umfasst die Zusammensetzung gegebenenfalls einen Absorber. Der Absorber grenzt die durch die Licht- oder Wärmeeinwirkung induzierte Polymerisation bzw. Vernetzung des mindestens einen polymerisierbaren organischen Binders räumlich ein. Der hierbei zugrundeliegende Mechanismus beruht darauf, dass der Absorber die chemische Reaktion, die zu einer Polymerisation oder Vernetzung führt, örtlich abbricht bzw. reduziert. Dies hat zur Folge, dass nur in den Bereichen des mindestens einen polymerisierbaren organischen Binders eine chemische Reaktion erfolgen kann, die unmittelbar der Licht- oder Wärmeeinwirkung ausgesetzt sind. In diesen Bereichen ist der effektive Licht- oder Wärmeeintrag ausreichend, so dass eine chemische Reaktion durch den Polymerisationsstarter bzw. Vernetzer initiiert und aufrechterhalten werden kann. In den Bereichen des mindestens einen polymerisierbaren organischen Binders, die der Licht- oder Wärmeeinwirkung nicht oder nicht direkt ausgesetzt sind, ist die Rate der Hemmung der chemischen Reaktion in Folge der Absorption von Licht oder Wärme durch den Absorber größer als die Rate der Initiierung neuer chemische Reaktionen. Infolgedessen wird der mindestens eine polymerisierbare organische Binder in diesen Bereichen nicht oder nur sehr viel geringer infolge der chemischen Reaktion verfestigt.

In einer weiteren Ausführungsform der vorliegenden Erfindung weist die Zusammensetzung mindestens eine zweite Art von kugelförmigen Quarzglaspartikeln auf. Diese haben im Vergleich zur ersten Art von kugelförmigen Quarzglaspartikeln einen deutlich größeren Durchmesser, welcher im Bereich von 2 bis 40 µm liegt. Bei Anwesenheit mindestens einer zweiten Art von kugelförmigen Quarzglaspartikeln mit dem vorstehend genannten Durchmesserbereich wird eine dichtere Packung erzielt, da nun die Quarzglaspartikel mit dem kleinerem Durchmesser die Lücken zwischen den Quarzglaspartikeln mit dem größeren Durchmesser auffüllen. Alle für die kugelförmigen Quarzglaspartikel mit einem Durchmesser im Bereich von 7 bis 100 nm genannten Definitionen und Einschränkungen gelten in analoger Weise auch für die kugelförmigen Quarzglaspartikel mit einem Durchmesser im Bereich von 2 bis 40 µm. Insbesondere besteht auch die zweite Art von kugelförmigen Quarzglaspartikeln aus hochreinem, amorphem Siliziumdioxid, d.h. der SiO₂-Massenanteil in den Quarzglaspartikeln ist mindestens bzw. ≥ 90%, bevorzugt mindestens bzw. ≥ 99% und besonders bevorzugt mindestens bzw. ≥ 99,9%. Ebenfalls ist auch in diesem Zusammenhang der Begriff "kugelförmig" so aufzufassen, dass auch Quarzglaspartikel mit kugelartiger geometrischer Form mit eingeschlossen sind, also solche Quarzglaspartikel, die sphäroid sind. Der vorstehend definierte Durchmesserbereich ist dabei so zu verstehen, dass in keiner Dimension der Durchmesser der Quarzglaspartikel im Wesentlichen kleiner als 2 µm und größer als 40 µm ist.

Das Verfahren zur Herstellung eines Formkörpers aus hochreinem, transparentem Quarzglas unter Verwendung der vorstehend beschriebenen Zusammensetzung kann im Rahmen einer additiven Fertigung, wie beispielsweise einem 3D-Druck, eingesetzt werden. Wie bereits eingangs erwähnt, umfasst das erfindungsgemäße Verfahren die nachstehenden Schritte, vorzugsweise in dieser Reihenfolge:
(a) Bereitstellen der vorstehend beschriebenen Zusammensetzung zur Herstellung eines Formkörpers aus hochreinem, transparentem Quarzglas in einer Vorrichtung;
(b) unvollständiges Aushärten des in der Zusammensetzung enthaltenen mindestens einen polymerisierbaren organischen Binders durch räumlich begrenzte Zufuhr von Licht oder Wärme, wodurch ein Grünling als Primärstruktur erhalten wird;
(c) Abtrennen des nicht-ausgehärteten, mindestens einen polymerisierbaren organischen Binders einschließlich der darin enthaltenen Komponenten von der Primärstruktur; und gegebenenfalls mindestens einmal Wiederholen der Schritte (a), (b) und (c);
(d) gegebenenfalls Nachbehandeln der Primärstruktur durch mindestens ein Verfahren, ausgewählt aus der Gruppe, bestehend aus Strukturieren mit Hilfe eines Formwerkzeuges, Bestrahlen mit hochenergetischer Strahlung und anschließendem Entwickeln, Fräsen, Bohren, Laminieren, Bonden, Schleifen, Polieren, Läppen, Gravieren und Behandeln mit Wärme oder Laserlicht;
(e) Entfernen einer gegebenenfalls in der Primärstruktur vorhandenen nicht-aushärtbaren Komponente;
(f) Entbindern der Primärstruktur durch thermische Behandlung, wodurch ein Braunling als poröse Sekundärstruktur erhalten wird;
(g) gegebenenfalls Auffüllen der porösen Sekundärstruktur mit mindestens einem Füllstoff; und
(h) Sintern der porösen Sekundärstruktur, wodurch der finale Formkörper erhalten wird.

Das erfindungsgemäße Verfahren unter Verwendung der vorstehend beschriebenen Zusammensetzung erlaubt die Bereitstellung eines freigeformten Körpers aus hochreinem, transparentem Quarzglas, welcher die im Stand der Technik bekannten Nachteile der additiven Fertigung von Quarzglasformkörpern überwindet. Insbesondere erlaubt das erfindungsgemäße Verfahren die Herstellung eines Formkörpers aus hochreinem, transparentem Quarzglas, der sowohl eine hohe Strukturauflösung als auch eine hohe optische und mechanische Güte aufweist.

Insbesondere lassen sich mit dem erfindungsgemäßen Verfahren auch filigrane Quarzglasstrukturen herstellen, die mit den im Stand der Technik beschriebenen RP-Prozessen bislang nicht erhältlich waren.

Die vorstehend aufgeführten Schritte (a) bis (h) des erfindungsgemäßen Verfahrens sind dabei wie folgt gekennzeichnet:
In Schritt (a) des erfindungsgemäßen Verfahrens wird die vorstehend beschriebene Zusammensetzung, welche die Herstellung eines Formkörpers aus hochreinem, transparentem Quarzglas erlaubt, in einer Vorrichtung bereitgestellt bzw. angeordnet. Gemäß der vorliegenden Erfindung ist die Vorrichtung keinen Einschränkungen unterworfen. Beispielsweise kann es sich bei der Vorrichtung um eine Platte, eine Wanne, eine fluidische Kammer, einen Vorratsbehälter, ein Rohrleitungs- oder Kanalsystem, einen elastischen Beutel oder Schlauch sowie um jede vergleichbare Form zur Aufbewahrung einer Flüssigkeit wie etwa ein Becherglas handeln. In einer Ausführungsform der vorliegenden Erfindung wird die Zusammensetzung nicht in einem geeigneten Gefäß bereitgestellt, sondern durch die intrinsische Oberflächenspannung der Komponenten in Form gehalten, beispielsweise in Form eines Tropfens oder eines Films. Auch kann als Vorrichtung eine starre geometrische Form Verwendung finden. Letztere weist eine Hohlraumstruktur auf, welche der Form des herzustellenden Glasbauteils entspricht, und kann so in einem replikativen Verfahren eingesetzt werden, wie weiter unten beschrieben.

In einer weiteren Ausführungsform, welche einer als "Lost-Form-Molding" bezeichneten Verfahrensmodifikation des erfindungsgemäßen Verfahrens entspricht, umfasst die Vorrichtung zusätzlich einen Formling, welcher aus einem Feststoff oder einer Flüssigkeit mit definierter physikalischer Struktur besteht. Im Falle eines Feststoffes kann der Formling beispielsweise mittels 3D-Druck oder Stereolithographie hergestellt werden. Bei Verwendung einer Flüssigkeit als Formling wird diese in den mindestens einen polymerisierbaren organischen Binder beispielsweise mit Hilfe einer Spritze appliziert. Der so entstehende Flüssigkeitstropfen wird dabei durch seine Oberflächenspannung kompakt gehalten, wodurch eine Art "schwebende" Struktur innerhalb des mindestens einen polymerisierbaren organischen Binders erhalten wird. Auf diese Weise können tropfenförmige Hohlraumstrukturen hergestellt werden, was insbesondere für die Schmuckherstellung interessant ist. Der Feststoff bzw. die Flüssigkeit des Formlings ist demnach mit dem mindestens einen polymerisierbaren organischen Binder nicht mischbar. Die Zusammensetzung wird hierbei in Schritt (a) in einer Vorrichtung, umfassend den vorstehend beschriebenen Formling, bereitgestellt bzw. derart angeordnet, so dass Letzterer zumindest teilweise von der Zusammensetzung umhüllt ist. Hierdurch wird nach Abschluss des erfindungsgemäßen Verfahrens ein Quarzglasformkörper mit einem makroskopischen Hohlraum, welcher die Form des Formlings aufweist, erhalten.

In Schritt (b) des erfindungsgemäßen Verfahrens wird der mindestens eine polymerisierbare organische Binder, welcher in der in Schritt (a) in der Vorrichtung bereitgestellten Zusammensetzung enthalten ist, unvollständig ausgehärtet, wodurch ein Grünling als Primärstruktur erhalten wird. Je nach Beschaffenheit des Polymerisationsstarters bzw. Vernetzers erfolgt das Aushärten des mindestens einen polymerisierbaren organischen Binders entweder durch Zufuhr von Licht oder durch Zufuhr von Wärme, vorzugsweise durch Zufuhr von Licht, da hierdurch mit einer höheren Strukturauflösung ausgehärtet werden kann. Die zur photolytischen bzw. thermolytischen Spaltung notwendige Wellenlänge bzw. Temperatur hängt naturgemäß vom jeweiligen Polymerisationsstarter bzw. Vernetzer ab und kann, wie bereits vorstehend erwähnt, dem Stand der Technik entnommen werden.

Die in Schritt (b) erhaltene Primärstruktur umfasst somit eine feste Bindermatrix aus dem ausgehärteten, mindestens einen polymerisierbaren organischen Binder und, darin dispergiert, die mindestens eine Art von kugelförmigen Quarzglaspartikeln mit einem Durchmesser im Bereich von 7 bis 100 nm. Darüber hinaus kann die Primärstruktur weitere Komponenten umfassen, die gegebenenfalls in der in Schritt (a) bereitgestellten Zusammensetzung enthalten sind, wie beispielsweise eine nicht-aushärtbare Komponente, eine zweite Art von kugelförmigen Quarzglaspartikeln und einen Absorber, wie vorstehend beschrieben.

Das Aushärten des mit der Zusammensetzung bereitgestellten mindestens einen polymerisierbaren organischen Binders erfolgt in Schritt (b) unvollständig. Ein unvollständiges Aushärten wird durch eine räumlich begrenzte Zufuhr von Wärme oder Licht, vorzugsweise von Licht, erzielt. Die bei der Belichtung erreichbare Ortsauflösung korreliert dabei mit dem Strahlprofil der hierbei zum Einsatz kommenden Lichtquelle. Je kleiner deren Strahldurchmesser ist, desto höher lassen sich die Konturen der Primärstruktur auflösen. In einer bevorzugten Ausführungsform des erfindungsgemäßen Verfahrens wird daher eine Laserlichtquelle oder eine hochauflösende Lithographie unter Verwendung einer Maske oder eines dynamischen Lichtmodulators, beispielsweise eines Mikrospiegelarraysystems, zum Aushärten des mindestens einen polymerisierbaren organischen Binders verwendet.

In Schritt (c) des erfindungsgemäßen Verfahrens wird der nicht-ausgehärtete, mindestens eine polymerisierbare organische Binder einschließlich der darin enthaltenen Komponenten von der Primärstruktur abgetrennt. Das Abtrennen kann beispielsweise durch eine Lösungsmittelbehandlung erfolgen. Erfindungsgemäß ist das Abtrennen des nicht-ausgehärteten, mindestens einen polymerisierbaren organischen Binders jedoch nicht auf eine bestimmte Methode beschränkt. So kann das Abtrennen beispielsweise auch mittels Unterdruck oder durch Verdampfung infolge einer Temperaturerhöhung erreicht werden.

Die Schritte (a) bis (c) des erfindungsgemäßen Verfahrens werden gegebenenfalls mindestens einmal, vorzugsweise mehrmals, wiederholt. Hierdurch wird die Primärstruktur in jedem Wiederholungszyklus sukzessiv erweitert, bis der gewünschte Formkörper erhalten wird. Hierzu wird die Zusammensetzung bei jedem Wiederholungszyklus zusammen mit der aus dem vorherigen Wiederholungszyklus erhaltenen Primärstruktur in der Vorrichtung geeigneterweise bereitgestellt bzw. angeordnet. Anschließend wird, wie vorstehend beschrieben, ausgehärtet und der nicht-ausgehärtete, mindestens eine polymerisierbare organische Binder zusammen mit den darin enthaltenen anderen Komponenten der Zusammensetzung abgetrennt. Werden die Schritte (a) bis (c) mindestens einmal wiederholt, ist es bevorzugt, dass das Aushärten des mindestens einen polymerisierbaren organischen Binders durch Licht erfolgt, um eine entsprechend hohe Strukturauflösung zu gewährleisten. Durch Einstellen der in Schritt (a) des erfindungsgemäßen Verfahrens vorgelegten bzw. eingesetzten Menge der Zusammensetzung kann die Strukturauflösung je nach den Erfordernissen des herzustellenden Quarzglasformkörpers angepasst werden. Bedarf es einer sehr hohen Strukturauflösung, wird in Schritt (a) lediglich eine geringe Menge der Zusammensetzung bereitgestellt und in Schritt (b) ausgehärtet. Ist die Strukturauflösung hingegen von untergeordneter Bedeutung, kann eine größere Menge der Zusammensetzung in Schritt (a) bereitgestellt und in Schritt (b) ausgehärtet werden, wodurch sich die Anzahl der Wiederholungszyklen entsprechend verringern lässt und die Herstellung des Formkörpers weniger Zeit in Anspruch nimmt.

Je nach Art des Aushärtens, ob durch Zufuhr von Licht oder durch Zufuhr von Wärme, wird der Fachmann einen geeigneten im Stand der Technik bekannten Polymerisationsstarter bzw. Vernetzer in der Zusammensetzung auswählen und im erfindungsgemäßen Verfahren einsetzen.

Nach gegebenenfalls mindestens einmaligem Wiederholen der Schritte (a) bis (c) wird die so erhaltene Primärstruktur in Schritt (d) gegebenenfalls durch ein geeignetes Verfahren nachbehandelt. Da die Primärstruktur im Wesentlichen aus der Bindermatrix, d.h. dem ausgehärteten, mindestens einen polymerisierbaren organischen Binder besteht, ist eine Nachbehandlung, insbesondere eine mechanische Nachbearbeitung, möglich. Erfindungsgemäß sind die in Schritt (d) in Frage kommenden Nachbehandlungsverfahren keinen besonderen Einschränkungen unterworfen. In einer bevorzugten Ausführungsform der vorliegenden Erfindung erfolgt das Nachbehandeln durch mindestens ein Verfahren, ausgewählt aus der Gruppe, bestehend aus Strukturieren mit Hilfe eines Formwerkzeuges, Bestrahlen mit hochenergetischer Strahlung und anschließendem Entwickeln, Fräsen, Bohren, Laminieren, Bonden, Schleifen, Polieren, Läppen, Gravieren und Behandeln mit Wärme oder Laserlicht. Auch kann jede andere Form der additiven oder subtraktiven Oberflächenbehandlung Anwendung finden. Eine solche Nachbehandlung ist insbesondere dann ratsam, wenn die Primärstruktur sichtbare Artefakte oder sonstige unerwünschte Oberflächendefekte aufweist, welche beispielsweise auf die verwendete Vorrichtung zurückzuführen sind. Dient eine starre geometrische Form, wie vorstehend beschrieben, als Vorrichtung, finden sich jedwede Unebenheiten der betreffenden Oberfläche hiervon in der Primärstruktur wieder.

In einer Ausführungsform des erfindungsgemäßen Verfahrens, welche als "Polymerreplikation" bezeichnet wird, erfolgt in Schritt (d) die Nachbehandlung unter Zuhilfenahme eines Formwerkzeuges, welches der Strukturierung der Primärstruktur dient. Das Formwerkzeug stellt ein geeignet strukturiertes Substrat dar, welches beispielsweise in einer Nanoimprintanlage verbaut werden kann. Die Strukturierung der Primärstruktur unter Verwendung des Formwerkzeuges erfolgt gegebenenfalls bei gleichzeitiger Zufuhr von Wärme, um die Strukturübertragung auf die Bindermatrix zu begünstigen. Nach dem Sintern in Schritt (h) wird auf diese Weise ein Quarzglasformkörper erhalten, in dem sich die Struktur des Formwerkzeuges widerspiegelt.

In einer weiteren Ausführungsform der vorliegenden Erfindung, welche als "Positiv-Resist" bezeichnet wird, erfolgt in Schritt (d) die Nachbehandlung der Primärstruktur durch Bestrahlen mit hochenergetischer Strahlung und anschließendem Entwickeln. Die Primärstruktur wird dabei räumlich aufgelöst hochenergetischer Strahlung (Elektronenstrahlung, lonenstrahlung, Röntgenstrahlung, etc.) ausgesetzt, wodurch die chemischen und/oder physikalischen Eigenschaften in den bestrahlten Bereichen der Bindermatrix der Primärstruktur so modifiziert werden, dass jene Bereiche in einem geeigneten Lösungsmittel löslich werden und schließlich entwickelt, d.h. abgetrennt werden können. Anstelle der Verwendung eines Lösungsmittels ist auch ein Entwickeln der bestrahlten Bereiche durch thermische Einwirkung oder durch Anlegen eines Unterdrucks möglich. Ähnlich wie in der vorstehend beschriebenen Verfahrensmodifikation der "Polymerreplikation" wird hier nach dem Sintern in Schritt (h) ein Quarzglasformkörper erhalten, der in den in Schritt (d) nachbehandelten Bereichen eine entsprechende Strukturierung aufweist.

In Schritt (e) des erfindungsgemäßen Verfahrens wird eine gegebenenfalls in der Primärstruktur als Mischphase vorhandene nicht-aushärtbare Komponente entfernt, wodurch in der Primärstruktur Hohlräume entstehen. Das Entfernen der nicht-aushärtbaren Komponente kann beispielsweise durch eine thermische Behandlung erfolgen. Der hierbei einzustellende Temperaturbereich hängt vom Siedepunkt bzw. Sublimationspunkt, oder aber vom Zersetzungspunkt der nicht-aushärtbaren Komponente ab. Typischerweise liegt die Temperatur einer solchen thermischen Behandlung in Schritt (e) im Bereich von 50 bis 300 °C, wobei ein Bereich von 100 bis 250 °C für die Temperatur bevorzugt ist. Die Dauer einer solchen thermischen Behandlung in Schritt (e) unterliegt keiner besonderen Einschränkung und hängt lediglich von den Abmessungen der Primärstruktur und der Menge der in der Zusammensetzung enthaltenen nicht-aushärtbaren Komponente ab. Typischerweise beträgt die Dauer der thermischen Behandlung in Schritt (e), sofern eine nicht-aushärtbare Komponente vorhanden ist, von 2 bis 6 Stunden. Die Heizrate ist dabei keinen Einschränkungen unterworfen. Sie liegt typischerweise im Bereich von 0,4 bis 0,6 K/min, beispielsweise beträgt sie 0,5 K/min. Eine geeignete thermische Behandlung in Schritt (e) kann ferner auch durch schrittweise Temperaturerhöhung ausgeführt werden. Alternativ kann die nicht-aushärtbare Komponente auch unter Verwendung von Lösungsmitteln durch Extraktion entfernt werden. Ebenfalls möglich ist eine Entfernung der nicht-aushärtbaren Komponente im Vakuum, d.h. unter Anlegen eines Unterdrucks.

Durch thermische Behandlung wird nun in Schritt (f) die Primärstruktur entbindert, d.h. der ausgehärtete, mindestens eine polymerisierbare organische Binder wird entfernt. Bei ausreichend hoher Temperatur, d.h. bei einer Temperatur größer als in Schritt (e), findet die pyrolytische Zersetzung der Bindermatrix statt. Hierbei treten die gasförmigen Zersetzungsprodukte aus der Primärstruktur aus. Enthält die Zusammensetzung eine nicht-aushärtbare Komponente, welche in Schritt (e) entfernt wird, können die Zersetzungsprodukte der Bindermatrix durch die in Schritt (e) entstehenden Hohlräume schnell und effizient die zu entbindernde Primärstruktur verlassen. Anderenfalls, d.h. bei Abwesenheit der durch die nicht-aushärtbare Komponente erzeugten Hohlräume, ist in Schritt (f) der Gastransport aus dem Inneren der Primärstruktur erschwert. Infolgedessen könnte es zu einem Riss der Primärstruktur kommen, da die bei der Pyrolyse entstehenden gasförmigen Zersetzungsprodukte der Bindermatrix nicht schnell genug diffusiv aus dem Inneren der Primärstruktur entfernt werden könnten. Durch das Entbindern der Primärstruktur wird schließlich ein Braunling als poröse Sekundärstruktur erhalten. Die poröse Sekundärstruktur besteht aus hochreinem Quarzglas und weist eine Vielzahl von Hohlräumen auf. Die Hohlräume sind dabei homogen über die poröse Sekundärstruktur verteilt und finden sich überall dort, wo vorher die Bindermatrix und gegebenenfalls die nicht-aushärtbare Komponente als Mischphase vorlagen. Die in der Zusammensetzung enthaltenen Quarzglaspartikel liegen in der porösen Sekundärstruktur an örtlich definierten Positionen vor. Umfasst die Zusammensetzung zwei verschiedene Arten von kugelförmigen Quarzglaspartikeln, kann auf diese Weise ein Braunling mit erhöhter Dichte erhalten werden, da die Lücken der einen Art von Quarzglaspartikeln mit den Quarzglaspartikeln der anderen Art gefüllt sind. Hierdurch kommt es beim Sintern in Schritt (h) zu einem geringeren Schrumpf der porösen Sekundärstruktur.

Die thermische Behandlung in Schritt (f) unterliegt keiner besonderen Einschränkung und schließt sich vorzugsweise direkt an Schritt (e) an. Ist in Schritt (e) eine thermische Behandlung zum Entfernen der nicht-aushärtbaren Komponente durchgeführt worden, findet demnach vor der Durchführung des Schrittes (f) vorzugsweise keine Abkühlung auf Raumtemperatur statt. Typischerweise liegt die Temperatur der thermischen Behandlung in Schritt (f) im Bereich von 200 bis 700 °C, wobei die Temperatur in Schritt (f), wie bereits vorstehend erwähnt, größer ist als die Temperatur in Schritt (e). In einer bevorzugten Ausführungsform der vorliegenden Erfindung liegt die Temperatur in Schritt (f) im Bereich von 250 bis 600 °C. Die Dauer der thermischen Behandlung in Schritt (f) unterliegt keiner besonderen Einschränkung und hängt lediglich von den Abmessungen der Primärstruktur und folglich von der Menge des zu zersetzenden organischen Binders ab. Typischerweise beträgt die Dauer der thermischen Behandlung in Schritt (f) von 3 bis 9 Stunden. Die Heizrate ist dabei erfindungsgemäß keinen Einschränkungen unterworfen. Sie liegt typischerweise im Bereich von 0,2 bis 5 K/min, beispielsweise beträgt sie 0,5 K/min, 1,0 K/min oder 2,5 K/min. Die thermische Behandlung in Schritt (f) kann ferner auch durch schrittweise Temperaturerhöhung ausgeführt werden. Nach vollständigem Entbindern kann die so erhaltene poröse Sekundärstruktur auf Raumtemperatur abgekühlt werden, was allerdings nicht zwingend erforderlich ist. Sie kann auch direkt in Schritt (h) gesintert werden. Soll die poröse Sekundärstruktur auf Raumtemperatur abgekühlt werden, kann dies beispielsweise bei einer Abkühlrate von 5 K/min erfolgen. Da Quarzglas einen geringen thermischen Ausdehnungskoeffizienten sowie eine hohe Temperaturwechselbeständigkeit aufweist, kann hierbei eine vergleichsweise hohe Abkühlrate gewählt werden.

Wie vorstehend erwähnt, können die Schritte (e) und (f) des erfindungsgemäßen Verfahrens direkt nacheinander ohne zwischenzeitliches Abkühlen durchgeführt werden. Entsprechend kann dabei ein fließender Übergang zwischen dem Entfernen der nicht-aushärtbaren Komponente, falls diese vorhanden ist und durch eine thermische Behandlung entfernt wird, und dem Entfernen der Bindermatrix, d.h. dem Entbindern der Primärstruktur vorliegen.

Umfasst die Vorrichtung einen Formling, wie dies in der als "Lost-Form-Molding" bezeichneten Verfahrensmodifikation der Fall ist, wird dieser in den vorstehend beschriebenen Schritten (e) und/oder (f) des erfindungsgemäßen Verfahrens entfernt. Je nach chemischer Natur des Formlings kann dieser beispielsweise durch thermische Zersetzung, Verdampfung, Sublimation oder Lösungsmittelextraktion aus der Primärstruktur entfernt werden. Durch das Entfernen des Formlings lassen sich nach dem Sintern in Schritt (h) strukturierte Quarzglasformkörper mit makroskopischer Hohlraumstruktur erhalten. Bedarf der Quarzglasformkörper keiner massiven Struktur, sondern vielmehr eines geringen Gewichts, lassen sich in dieser Ausführungsform sowohl Zeit als auch Kosten einsparen.

In Schritt (g) des erfindungsgemäßen Verfahrens wird die poröse Sekundärstruktur gegebenenfalls mit mindestens einem Füllstoff aufgefüllt. Der Füllstoff muss daher notwendigerweise eine geeignete Partikelgröße aufweisen, so dass er in die Hohlräume der porösen Sekundärstruktur eingebracht werden kann. Durch das Auffüllen mit einem Füllstoff wird die Porosität der Sekundärstruktur durch Nachverdichtung verringert, wodurch im anschließenden Sintern, d.h. in Schritt (h) wie weiter unten beschrieben, der Braunling einem geringeren Schrumpf unterliegt. Das Auffüllen der porösen Sekundärstruktur mit einem Füllstoff dient folglich dem Erhalt der Formstabilität nach dem Sintern in Schritt (h). Sollen Füllstoffe in die poröse Sekundärstruktur eingebracht werden, wird diese nach der thermischen Behandlung in Schritt (f) auf Raumtemperatur, wie vorstehend beschrieben, abgekühlt.

Der Füllstoff unterliegt erfindungsgemäß keinen Einschränkungen. In einer bevorzugten Ausführungsform des erfindungsgemäßen Verfahrens wird der Füllstoff aus der Gruppe, bestehend aus anorganischen Pigmenten, siliziumbasierten Präkursoren und titanbasierten Präkursoren, ausgewählt.

Bei Verwendung von siliziumbasierten Präkursoren lassen sich die in den Schritten (e) und (f) des erfindungsgemäßen Verfahrens erzeugten Hohlräume mit Quarzglas nachverdichten. In ähnlicher Weise können titanbasierte Präkursoren in die poröse Sekundärstruktur eingebracht werden, wodurch schließlich Gläser mit sehr geringer thermischer Ausdehnung erhalten werden. Zur Auffüllung der Hohlräume eignen sich grundsätzlich alle Prozesse, die in der Lage sind, Füllstoffe in die poröse Sekundärstruktur einzubringen. Als Beispiele seien hier die Gasphasenabscheidung sowie die Flüssigkeitsinfiltration genannt. Auch ist hier die Kombination mit Sol-Gel-Prozessen möglich.

Neben der Nachverdichtung kann Schritt (g) des erfindungsgemäßen Verfahrens vor allem auch dazu genutzt werden, die optischen und/oder mechanischen und/oder thermischen Eigenschaften des nach dem Sintern in Schritt (h) erhaltenen finalen Formkörpers zu modifizieren. Beispielsweise kann durch Einbringen von Metallsalzlösungen dem Quarzglasformkörper eine Farbe verliehen werden. In einer Ausführungsform des erfindungsgemäßen Verfahrens werden daher in Schritt (g) anorganische Pigmente als Füllstoff verwendet. Beispiele für anorganische Pigmente sind unter anderem Gold(III)chlorid AuCl₃ oder Chrom(III)nitrat Cr(NO₃)₃. Das Einbringen der anorganischen Pigmente kann beispielsweise durch Tränken der porösen Sekundärstruktur in einer entsprechenden Metallsalzlösung erfolgen. Erfindungsgemäß ist das Verfahren in Schritt (g) nicht auf einen einzigen Füllstoff beschränkt. Beispielsweise können in einem ersten Schritt durch Gasphasenabscheidung Quarzglaspräkursoren, also siliziumbasierte Präkursoren, in die poröse Sekundärstruktur eingebracht werden und in einem zweiten Schritt anorganische Pigmente durch Flüssigkeitsinfiltration.

Im Weiteren wird die poröse Sekundärstruktur in Schritt (h) des erfindungsgemäßen Verfahrens einem Sintern unterzogen, wodurch die poröse Sekundärstruktur zum finalen Formkörper verdichtet wird. Dieser ist hochtransparent und weist keine poröse Struktur mehr auf. Das Sinterprotokoll richtet sich dabei nach der Vorbehandlung in Schritt (g). Werden in diesem beispielsweise thermisch zersetzbare Präkursoren in die poröse Sekundärstruktur eingebracht, ist ein mehrstufiger Sinterprozess in Schritt (h) erforderlich, um zunächst die eingebrachten Präkursoren thermisch zu zersetzen, bevor das eigentliche Sintern erfolgt. Bedarf es einer solchen thermischen Zersetzung von gegebenenfalls in die poröse Sekundärstruktur eingebrachten Präkursoren, wird der Braunling beispielsweise zunächst für eine Dauer von 0,5 bis 5 Stunden bei einer Temperatur im Bereich von 100 bis 600 °C vorbehandelt. Die Heizrate unterliegt bei dieser Vorbehandlung keinen besonderen Einschränkungen. Typischerweise erfolgt das eigentliche Sintern in Schritt (h) schrittweise im Bereich von 700 bis 1500 °C, wobei zunächst bei einer Temperatur im Bereich von 700 bis 1000 °C für eine Dauer von 1 bis 3 Stunden und anschließend bei einer Temperatur im Bereich von 1000 bis 1500 °C für eine Dauer von 1 bis 2 Stunden gesintert wird. Die Heizrate kann hierbei im Bereich von 2 bis 15 K/min liegen. Durch den geringen thermischen Ausdehnungskoeffizienten sowie die hohe Temperaturwechselbeständigkeit von Quarzglas kann hierbei eine vergleichsweise hohe Heizrate gewählt werden.

Im Gegensatz zu den im Stand der Technik bekannten Lasersinterverfahren erfolgt das Sintern im erfindungsgemäßen Verfahren durch Zufuhr von Wärme. Es handelt sich demnach um einen thermischen Sinterprozess.

Das erfindungsgemäße Verfahren bedarf keiner Druckbeaufschlagung. Daher sind die apparativen Anforderungen an das erfindungsgemäße Verfahren deutlich geringer. Stattdessen kann in Schritt (h) das Sintern sogar unterhalb des Atmosphärendrucks stattfinden. In einer Ausführungsform des erfindungsgemäßen Verfahrens erfolgt das Sintern bei einem Druck von höchstens bzw. ≤ 0,1 mbar, bevorzugt von höchstens bzw. ≤ 0,01 mbar und besonders bevorzugt von höchstens bzw. ≤ 0,0001 mbar. Nach dem Sintern kann der so erhaltene finale Formkörper auf Raumtemperatur abgekühlt werden, was auch hier typischerweise mit einer vergleichsweise hohen Abkühlrate im Bereich von 2 bis 6 K/min erfolgen kann.

Das erfindungsgemäße Verfahren zur Herstellung eines Formkörpers aus hochreinem, transparentem Quarzglas, umfassend die Verfahrensschritte (a) bis (h), ist in Fig. 1 veranschaulicht. Weitere Ausführungsformen hiervon sind in Fig. 2 und in Fig. 3 dargestellt.

Der durch das erfindungsgemäße Verfahren erhaltene finale Formkörper weist, sofern in Schritt (g) lediglich siliziumbasierte Präkursoren in die Hohlräume der porösen Sekundärstruktur eingebracht werden, eine chemische Zusammensetzung auf, die von der herkömmlich gefertigter Quarzgläser nicht zu unterscheiden ist. In gleicher Weise gilt dies auch für die mechanischen und optischen Eigenschaften des Formkörpers. Insbesondere die Vickers Härte, die biaxiale Biegefestigkeit sowie die Transmission stimmen mit den entsprechenden Werten von herkömmlich gefertigten Quarzgläsern überein.

Ein Formkörper aus hochreinem, transparentem Quarzglas, welcher durch das erfindungsgemäße Verfahren unter Verwendung der vorstehend beschriebenen Zusammensetzung erhalten werden kann, weist folgende Eigenschaften auf:
- eine optische Transmission von mindestens bzw. ≥ 70% bei einer Wellenlänge von 200 nm sowie eine optische Transmission von größer bzw. > 70% in einem Wellenlängenbereich von 200 bis 1000 nm bei einer Schichtdicke von 1 mm;
- eine Vickers Härte von 799 HV, gemessen in Übereinstimmung mit DIN EN ISO 6507; und
- eine biaxiale Biegefestigkeit von 100 MPa, gemessen in Übereinstimmung mit DIN EN ISO 6872.

Das erfindungsgemäße Verfahren erlaubt die gezielte Herstellung dreidimensionaler Quarzglasstrukturen beliebiger Gestalt im Rahmen einer additiven Fertigung, wie beispielsweise einem 3D-Druck, durch das mindestens einmalige Wiederholen der vorstehend beschriebenen Schritte (a) bis (c). In einer Ausführungsform der vorliegenden Erfindung erfolgt das Aushärten des in der Zusammensetzung enthaltenen mindestens einen polymerisierbaren organischen Binders durch Zufuhr von Licht in Schritt (b) räumlich aufgelöst. Diese Ausführungsform ist mit einem stereolithographischen RP-Prozess vergleichbar, der bislang nur für die Herstellung von Polymerbauteilen Anwendung gefunden hat. In gleicher Weise lässt sich jedoch in Schritt (b) des erfindungsgemäßen Verfahrens jeder andere RP-Prozess heranziehen, in dem eine Primärstrukturierung mittels Belichtung vorgenommen wird. So kann in einer weiteren Ausführungsform der vorliegenden Erfindung auch ein kombiniertes Spotting-Verfahren mit anschließender Belichtung, wie es im 3D-Druck üblich ist, angewendet werden.

Durch Bereitstellen eines dreidimensionalen Formmodells in digitaler Form, beispielsweise durch eine CAD-Software, lassen sich so erfindungsgemäß Formkörper aus hochreinem, transparentem Quarzglas mit beliebiger Form herstellen, deren Strukturauflösung verfahrensbedingt mit der von Polymerbauteilen vergleichbar ist.

Grundsätzlich kann das erfindungsgemäße Verfahren auch zur Replikation von Formkörpern verwendet werden.

Das erfindungsgemäße Verfahren eignet sich somit einerseits zur freien dreidimensionalen Formgebung im Rahmen eines RP-Prozesses, kann aber andererseits in nahezu unveränderter Weise auch zur Replikation einer vorgegebenen Struktur und somit als replikatives Verfahren zur Herstellung von Quarzglasformkörpern Verwendung finden.

Insbesondere ermöglicht das erfindungsgemäße Verfahren die freie dreidimensionale Formgebung für Strukturen aus Quarzglas bei hoher Strukturauflösung und somit geringer Oberflächenrauigkeit. Im Gegensatz zu dem eingangs erwähnten modifizierten FDM-Verfahren dienen sämtliche thermischen Verfahrensschritte des erfindungsgemäßen Verfahrens nicht der Strukturgebung. Letztere erfolgt allein lithographisch, wodurch eine hohe räumliche Auflösung erzielt werden kann. Nicht zuletzt aus diesem Grund ist der apparative Aufwand bei den thermischen Behandlungsschritten im erfindungsgemäßen Verfahren signifikant geringer als beispielsweise bei den eingangs erwähnten selektiven Lasersinterprozessen, die zumeist in hochreiner Atmosphäre oder im Vakuum stattfinden müssen.

Im Vergleich zum selektiven Lasersintern erzeugt das erfindungsgemäße Verfahren Formkörper mit hervorragenden optischen, mechanischen und strukturellen Eigenschaften. Bedingt durch die Tatsache, dass alle thermischen Behandlungsschritte nicht der räumlichen Strukturierung dienen, kann die Oberflächenqualität der initialen Strukturgebung nahezu unverfälscht auf den finalen Formkörper übertragen werden. Erlaubt die Strukturgebung beispielsweise die Herstellung von spiegelnden Oberflächen, so weist der finale Formkörper ebenso spiegelnde Oberflächen bei hoher optischer Güte auf. Dies ist ein signifikanter Vorteil gegenüber dem modifizierten FDM-Ansatz und dem selektiven Lasersintern, welche beide Oberflächen von lediglich geringer optischer Qualität bereitstellen.

Ein weiterer Vorteil des erfindungsgemäßen Verfahrens liegt darin begründet, dass sich sämtliche thermische Behandlungsschritte, wie das Entbindern und Sintern, ohne externen Druck durchführen lassen. Insbesondere ist keine zusätzliche Druckbeaufschlagung notwendig, um Formkörper mit ausreichender Dichte und hoher optischer Transmission zu erzeugen. Die mit dem erfindungsgemäßen Verfahren hergestellten Quarzglasformkörper können ferner ohne zusätzliche Fixierung prozessiert werden. Es liegen keine speziellen Anforderungen an die in Schritt (a) verwendete Vorrichtung vor.

Weiterhin kann das erfindungsgemäße Verfahren, wie vorstehend erwähnt, mit Sol-Gel-Ansätzen kombiniert werden, um die poröse Sekundärstruktur nachzuverdichten sowie gegebenenfalls optisch und/oder mechanisch und/oder thermisch zu modifizieren. Der eigentliche Kern des Verfahrens, d.h. die Herstellung der Primärstruktur, kommt allerdings ohne die Verwendung kondensierender Präkursoren aus, wodurch Formkörper mit deutlich geringerem Schwund und stark verbesserter optischer Klarheit und mechanischer Festigkeit erhalten werden. Da der Kernprozess nicht verändert wird, treten die klassischen Nachteile von Sol-Gel-Ansätzen, d.h. Schwund sowie geringe Dichte des finalen Formkörpers, im erfindungsgemäßen Verfahren nicht zutage.

Die Figuren zeigen:

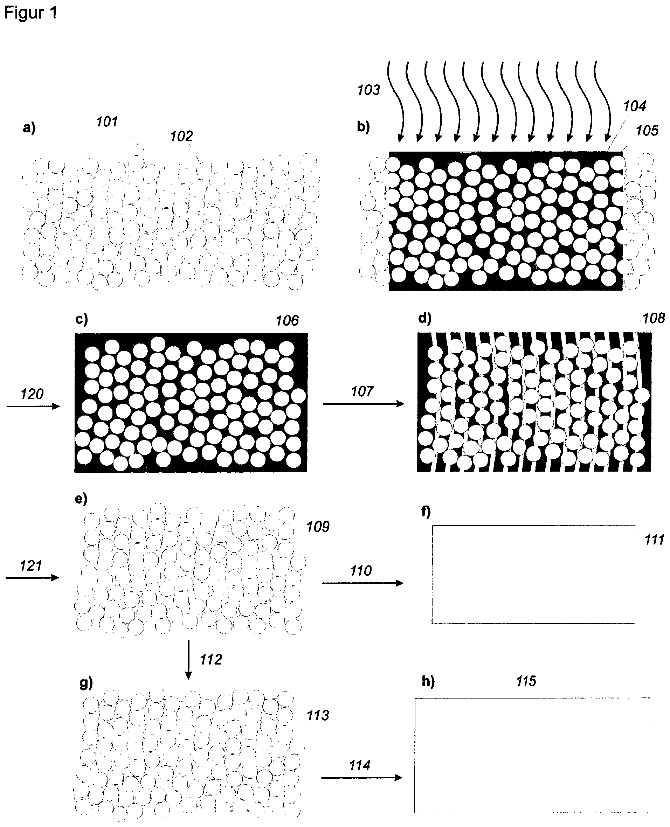

Fig. 1 zeigt eine schematische Darstellung des erfindungsgemäßen Verfahrens: (a) polymerisierbarer organischer Binder (101) mit darin dispergierten Quarzglaspartikeln (102), (b) durch strukturierte Belichtung, d.h. räumlich begrenzte Zufuhr von Licht (103) kann der mindestens eine polymerisierbare organische Binder räumlich aufgelöst ausgehärtet werden, wobei in der ausgehärteten Bindermatrix (105) Mischphasen der nicht-aushärtbaren Komponente (104) vorliegen, (c) nach Abtrennen (120) des nicht-ausgehärteten, organischen Binders liegt der finale Grünling (106) vor, (d) durch Entfernen (107) der nicht-aushärtbaren Komponente aus dem Grünling entstehen Hohlräume (108), (e) durch thermische Zersetzung (121) des ausgehärteten, organischen Binders entsteht der Braunling (109), (f) dieser kann nun mittels Sintern (110) zum finalen Formkörper (111) verdichtet werden, (g) oder aber dessen Hohlräume können mit einem geeigneten Verfahren (112) aufgefüllt werden, um die optischen und/oder mechanischen und/oder thermischen Eigenschaften des finalen Formkörpers zu modifizieren und/oder den Braunling vor dem Sintern nachzuverdichten (113), (h) der mittels eines geänderten Sinterprotokolls (114) aus dem nachbehandelten Braunling hergestellte finale Formkörper (115) weist verringerten Schrumpf und/oder gezielt modifizierte Eigenschaften auf.

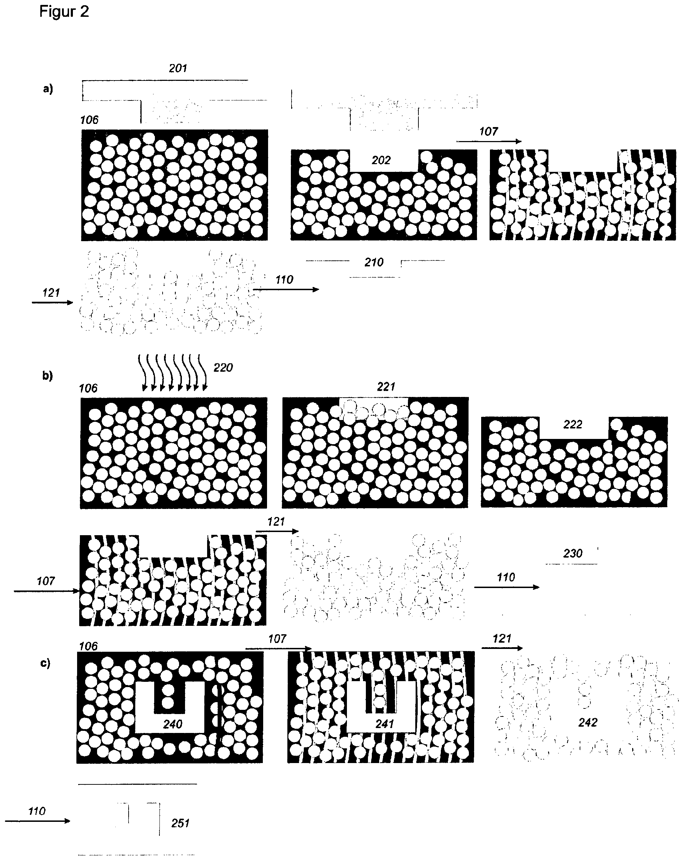

Fig. 2 zeigt schematische Darstellungen von Ausführungsformen des erfindungsgemäßen Verfahrens: (a) Verfahrensmodifikation "Polymerreplikation": Der Grünling (106) wird gegebenenfalls einer thermischen Behandlung unterzogen und mittels eines Formwerkzeuges (201) strukturiert, wodurch der Grünling dessen inverse Struktur (202) annimmt. Nach Entfernen (107) der nicht-aushärtbaren Komponente, Entbindern (121) und Sintern (110) wird ein strukturierter Quarzglasformkörper (210) erhalten; (b) Verfahrensmodifikation "Positiv-Resist": Der Grünling (106) wird lokal mit hochenergetischer Strahlung (220) beaufschlagt, wodurch sich die chemische und/oder physikalische Struktur des ausgehärteten, organischen Binders lokal verändert (221). Nach Entwicklung (222) der bestrahlten Stelle, Entfernen (107) der nicht-aushärtbaren Komponente, Entbindern (121) und Sintern (110) wird ein strukturierter Quarzglasformkörper (230) erhalten; (c) Verfahrensmodifikation "Lost-Form-Molding": Vor dem Aushärten des mindestens einen polymerisierbaren organischen Binders zum Grünling wird ein Formling aus einem/einer mit dem organischen Binder nicht-mischbaren Feststoff/Flüssigkeit (240) in den organischen Binder eingebracht. Der Formling ist somit im Grünling (106) nach dem Aushärten eingeschlossen. Beim Entfernen (107) der nicht-aushärtbaren Komponente, spätestens beim Entbindern (121), wird der Formling (241) durch Zersetzung, Verdampfung, Sublimation oder Lösungsmittelextraktion entfernt, wodurch ein dem Formling entsprechender Hohlraum (242) innerhalb des Bräunlings zurückbleibt. Nach dem Sintern (110) wird ein strukturierter Quarzglasformkörper (251) mit eben jenem Hohlraum erhalten.

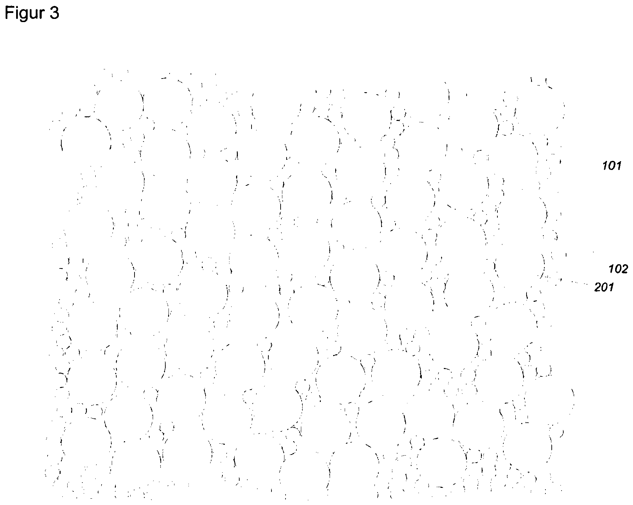

Fig. 3 zeigt einen organischer Binder (101), in dem zwei Arten von kugelförmigen Quarzglaspartikeln, die sich signifikant in ihrem Durchmesser unterscheiden, dispergiert sind. Die Quarzglaspartikel der zweiten Art (201) bilden dabei die Hohlräume aus, welche die Quarzglaspartikel der ersten Art (102) auffüllen. Aus solchen Zusammensetzungen lassen sich Grünlinge mit signifikant erhöhtem Füllgrad und damit signifikant erhöhter Dichte erzeugen.

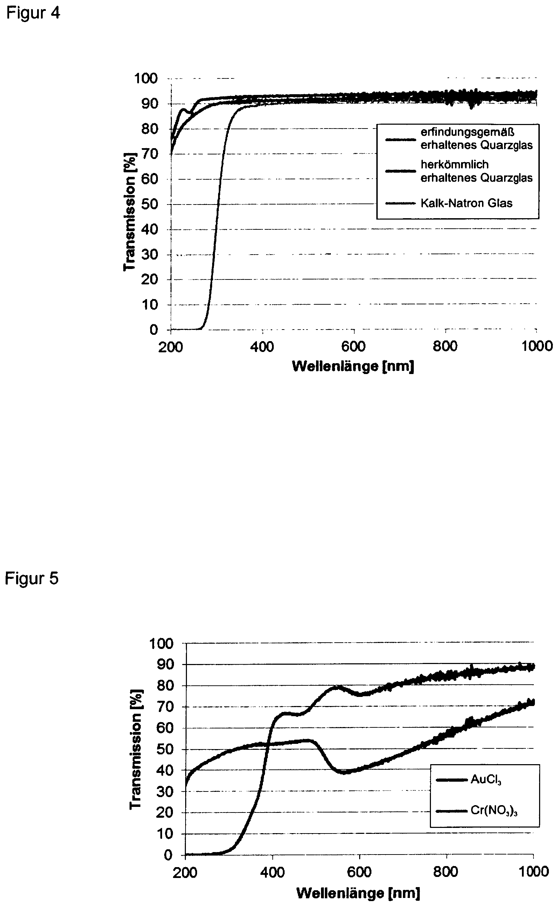

Fig. 4 zeigt die optische Transmission des in Beispiel 1 erhaltenen Quarzglasformkörpers nach dem Sintern im Vergleich zu herkömmlich erhaltenem Quarzglas und Kalk-Natron-Glas.
Fig. 5 zeigt die optische Transmission des in Beispiel 2 durch Tränken des Braunlings erhaltenen eingefärbten Quarzglasformkörpers.

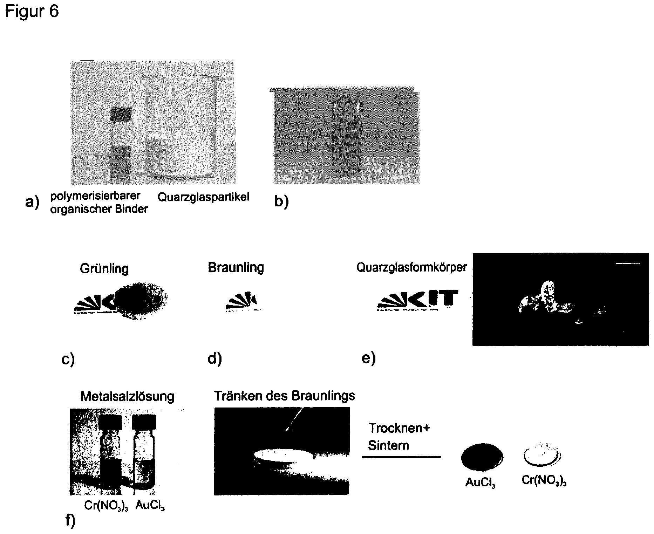

Fig. 6 zeigt die Entstehung des Quarzglasformkörpers nach dem erfindungsgemäßen Verfahren ausgehend von der vorstehend beschriebenen Zusammensetzung: (a) zeigt den organischen Binder sowie die Quarzglaspartikel, (b) die hieraus erhaltene Suspension mit im organischen Binder dispergierten Quarzglaspartikeln, (c) den Grünling, (d) den Braunling, (e) den finalen Quarzglasformkörper (Maßstab: 5 mm) aus Beispiel 1, sowie (f) das Auffüllen der Hohlräume des Braunlings zur Erzeugung des eingefärbten Quarzglasformkörpers aus Beispiel 2.

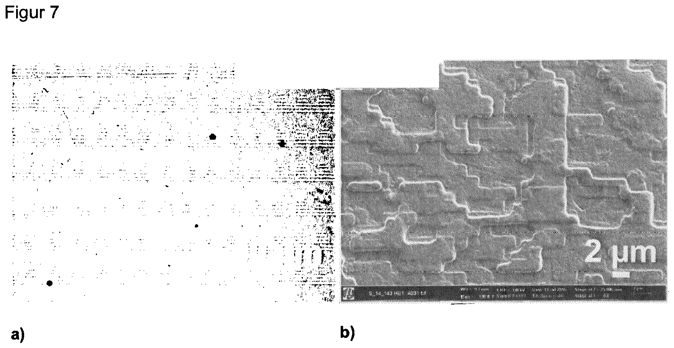

Fig. 7 zeigt das Ergebnis der in Beispiel 3 angewandten Verfahrensmodifikation "Polymerreplikation": (a) zeigt den Grünling, der mittels eines Formwerkzeuges (Nanoimprintanlage) strukturiert wurde, und (b) den strukturierten Quarzglasformkörper, der aus diesem Grünling nach Abschluss des erfindungsgemäßen Verfahrens erhalten wurde. Bei (a) handelt es sich um eine lichtmikroskopische Aufnahme, während es sich bei (b) um die Aufnahme aus einem Rasterelektronenmikroskop handelt.

### Beispiele

Die nachstehenden Beispiele dienen als weitere Erläuterung der vorliegenden Erfindung, ohne darauf beschränkt zu sein.

### Beispiel 1

In einem 50 mL-Becherglas wurde eine Zusammensetzung, umfassend die nachstehenden Komponenten, bereitgestellt:
- 8,25 mL Hydroxyethylmethacrylat und 3 mL Tetraethylenglycoldimethacrylat als polymerisierbare organische Binder;
- 3,75 mL Phenoxyethanol als nicht-aushärtbare Komponente;
- 0,6 g 2,2-Dimethoxy-2-phenylacetophenon als mittels Licht aktivierbarer Radikalinitiator;
- 6 mg Sudan Orange G als Absorber; und
- 25 g Quarzglaspartikel mit einem Durchmesser im Bereich von 10 bis 100 nm, wobei der mittlere Durchmesser 40 nm betrug.

Die Zusammensetzung war eine leicht gelbliche, hochviskose Suspension und wies eine Viskosität von etwa 2,82 Pa·s bei einer Scherrate von 100 s⁻¹ und einer Temperatur von 20 °C auf.

In einem nächsten Schritt wurde die Zusammensetzung auf einem konventionellen RP-System (Asiga Pico 2, einem Stereolithographiesystem, erhältlich von Asiga) unter Verwendung eines geeigneten 3D-Modells durch Zufuhr von UV-Licht mit einer Wellenlänge von 385 nm strukturiert. Infolge der Strukturierung erfolgte die primäre Formgebung zum Grünling.

Der Grünling wurde sodann einer mehrstufigen thermischen Behandlung mit nachstehendem Temperaturprotokoll unterzogen:

| | | | |
|---|---|---|---|
| • Heizrate: | 0,5 K/min, 25 °C | → | 150 °C, Haltezeit: 4 h |
| • Heizrate: | 0,5 K/min, 150 °C | → | 280 °C, Haltezeit: 4 h |
| • Heizrate: | 1 K/min, 280 °C | → | 550 °C, Haltezeit: 2 h |
| • Abkühlrate: | 5 K/min, 550 °C | → | 25 °C, Ende |

Hierbei diente der erste thermische Behandlungsschritt dem Entfernen der im Grünling enthaltenen nicht-aushärtbaren Komponente, während durch den zweiten und dritten thermischen Behandlungsschritt der Grünling entbindert, d.h. die ausgehärtete, organische Bindermatrix entfernt wurde.

Im nächsten Schritt wurde der so erhaltene Braunling unter Vakuum bei einem Druck von etwa 0,1 mbar gesintert, wodurch es zu einer Verdichtung des Braunlings kam und der finale Formkörper erhalten wurde. Das Temperaturprotokoll während des Sinterns war dabei wie folgt:

| | | | |
|---|---|---|---|
| • Heizrate: | 5 K/min, 25 °C | → | 800 °C, Haltezeit: 2 h |
| • Heizrate: | 3 K/min, 800 °C | → | 1300 °C, Haltezeit: 1,5 h |
| • Abkühlrate: | 5 K/min, 1300 °C | → | 25 °C, Ende |

Nach Abschluss des vorstehenden Temperaturprotokolls wies der Formkörper eine minimale optische Transmission von 72% bei einer Wellenlänge von 200 nm sowie eine optische Transmission von größer 72% in einem Wellenlängenbereich von 200 bis 1000 nm auf. Bei den Transmissionsmessungen betrug die Schichtdicke des Formkörpers 1 mm. Der Formkörper wies somit eine optische Transparenz auf, die von herkömmlichem Quarzglas nicht zu unterscheiden war (Fig. 4). Bei den Messungen kam ein UV/VIS-Spektrometer des Typs Evolution 201 (Thermo Scientific, Deutschland) zum Einsatz, welches im Transmissionsmodus betrieben wurde.

Des Weiteren wies der Formkörper eine Vickers Härte von 799 HV, gemessen in Übereinstimmung mit DIN EN ISO 6507 (System: Fischerscope HV 100, Helmut Fischer GmbH, Deutschland), sowie eine biaxiale Biegefestigkeit von 100 MPa, gemessen in Übereinstimmung mit DIN EN ISO 6872 (System: 10T, UTS, Deutschland), auf. Der Formkörper war somit auch hinsichtlich seiner mechanischen Eigenschaften nicht von herkömmlich erhaltenem, reinem Quarzglas zu unterscheiden, für das ebenfalls eine Vickers Härte von 799 HV sowie eine biaxiale Biegefestigkeit von 100 MPa üblich sind.

### Beispiel 2: Auffüllen der porösen Sekundärstruktur mit anorganischen Pigmenten

Unter den gleichen Bedingungen wie in Beispiel 1 wurde ein Braunling erhalten. Durch Auffüllen der sich im Braunling befindlichen Hohlräume mit Gold(III)chlorid wurde eine kolloidale Rotfärbung erhalten, während das Auffüllen mit Chrom(III)nitrat zu einer ionischen Grünfärbung führte. Der Braunling wurde zu diesem Zweck in eine ethanolische Lösung mit 0,1 Massen-% AuCl₃ bzw. 0,5 Massen-% Cr(NO₃)₃ getränkt und anschließend für 1 Stunde bei 50 °C getrocknet. Das Sintern erfolgte nach dem Temperaturprotokoll aus Beispiel 1 unter Stickstoffatmosphäre bei einem Druck von etwa 0,1 mbar. Die nach dem Sintern jeweils erhaltenen Quarzglasformkörper waren farbig, was sich auch in den Transmissionsspektren zeigte (Fig. 5).

Die Entstehung des Quarzglasformkörpers nach dem erfindungsgemäßen Verfahren ausgehend von der vorstehend beschriebenen Zusammensetzung, wie in den Beispielen 1 und 2 beschrieben, ist in Fig. 6 wiedergegeben.

### Beispiel 3: Verfahrensmodifikation "Polymerreplikation"

In einem 50 mL-Becherglas wurde eine Zusammensetzung, umfassend die nachstehenden Komponenten, vorgelegt:
- 12,8 mL Hydroxyethylmethacrylat als polymerisierbarer organischer Binder;
- 4,3 mL Phenoxyethanol als nicht-aushärtbare Komponente;
- 0,6 g 2,2-Dimethoxy-2-phenylacetophenon als mittels Licht aktivierbarer Radikalinitiator; und
- 25 g Quarzglaspartikel mit einem Durchmesser im Bereich von 10 bis 100 nm, wobei der mittlere Durchmesser 40 nm betrug.

Die vorstehende Zusammensetzung wurde durch Zufuhr von UV-Licht bei einer Wellenlänge von 365 nm ausgehärtet. Der so erhaltene thermoplastische Grünling wurde mittels einer herkömmlichen Nanoimprintanlage (Typ EVG HE510, erhältlich von EVG) bei einer Temperatur von 70 °C, einer Prägekraft von 1000 N und einer Haltezeit von 5 Minuten geprägt. Das Entfernen der nicht-aushärtbaren Komponente, das Entbindern des Grünlings und das Sintern des Braunlings erfolgten nach dem Temperaturprotokoll aus Beispiel 1, wie vorstehend beschrieben. Die durch das in der Nanoimprintanlage verbaute Formwerkzeug hervorgerufene Strukturierung ist in Fig. 7 sowohl für den Grünling als auch für den finalen Quarzglasformkörper dargestellt.

## Patentansprüche

1. Verfahren zur Herstellung eines Formkörpers aus hochreinem, transparentem Quarzglas, umfassend die nachstehenden Schritte:
(a) Bereitstellen einer Zusammensetzung zur Herstellung eines Formkörpers aus hochreinem, transparentem Quarzglas in einer Vorrichtung, wobei die Zusammensetzung die nachstehenden Komponenten umfasst:
mindestens einen polymerisierbaren organischen Binder, welcher in einem organischen Lösungsmittel gelöst ist;
einen Polymerisationsstarter bzw. Vernetzer, der durch Zufuhr von Licht oder Wärme die Polymerisation oder Vernetzung des mindestens einen polymerisierbaren organischen Binders initiiert; und
mindestens eine Art von kugelförmigen Quarzglaspartikeln, die in dem mindestens einen polymerisierbaren organischen Binder in dispergierter Form vorliegen und einen Durchmesser im Bereich von 7 bis 100 nm aufweisen;
(b) unvollständiges Aushärten des in der Zusammensetzung enthaltenen mindestens einen polymerisierbaren organischen Binders durch räumlich begrenzte Zufuhr von Licht oder Wärme, wodurch ein Grünling als Primärstruktur erhalten wird;
(c) Abtrennen des nicht-ausgehärteten, mindestens einen polymerisierbaren organischen Binders einschließlich der darin enthaltenen Komponenten von der Primärstruktur; und gegebenenfalls mindestens einmal Wiederholen der Schritte (a), (b) und (c);
(d) gegebenenfalls Nachbehandeln der Primärstruktur durch mindestens ein Verfahren, ausgewählt aus der Gruppe, bestehend aus Strukturieren mit Hilfe eines Formwerkzeuges, Bestrahlen mit hochenergetischer Strahlung und anschließendem Entwickeln, Fräsen, Bohren, Laminieren, Bonden, Schleifen, Polieren, Läppen, Gravieren und Behandeln mit Wärme oder Laserlicht;
(e) Entfernen einer gegebenenfalls in der Primärstruktur vorhandenen nicht-aushärtbaren Komponente;
(f) Entbindern der Primärstruktur durch thermische Behandlung, wodurch ein Braunling als poröse Sekundärstruktur erhalten wird;
(g) gegebenenfalls Auffüllen der porösen Sekundärstruktur mit mindestens einem Füllstoff; und
(h) Sintern der porösen Sekundärstruktur, wodurch der finale Formkörper erhalten wird.

2. Verfahren nach Anspruch 1, wobei der mindestens eine polymerisierbare organische Binder ein Monoacrylat und/oder ein Diacrylat ist.

3. Verfahren nach Anspruch 1 oder 2, weiter umfassend eine nicht-aushärtbare Komponente, welche bei Raumtemperatur in fester oder in zähfließend flüssiger Form vorliegt.

4. Verfahren nach einem der Ansprüche 1 bis 3, weiter umfassend mindestens eine zweite Art von kugelförmigen Quarzglaspartikeln mit einem Durchmesser im Bereich von 2 bis 40 µm.

5. Verfahren nach einem der Ansprüche 1 bis 4, wobei das Entfernen der gegebenenfalls in der Primärstruktur vorhandenen nicht-aushärtbaren Komponente in Schritt (e) durch thermische Behandlung bei einer Temperatur im Bereich von 50 bis 300 °C, durch Anlegen eines Unterdrucks oder durch Lösungsmittelextraktion erfolgt.

6. Verfahren nach einem der Ansprüche 1 bis 5, wobei das Entbindern der Primärstruktur in Schritt (f) bei einer Temperatur im Bereich von 200 bis 700 °C erfolgt.

7. Verfahren nach einem der Ansprüche 1 bis 6, wobei das Sintern der porösen Sekundärstruktur in Schritt (h) bei einer Temperatur im Bereich von 700 bis 1500 °C und bei einem Druck von höchstens 0,1 mbar erfolgt.

8. Verfahren nach einem der Ansprüche 1 bis 7, wobei der mindestens eine Füllstoff in Schritt (g) aus der Gruppe, bestehend aus anorganischen Pigmenten, siliziumbasierten Präkursoren und titanbasierten Präkursoren, ausgewählt wird.

## Claims

1. A process for the production of a molding made of high-purity transparent quartz glass, comprising the following steps:
(a) providing a composition for the production of a molding made of high-purity transparent quartz glass in a device, the composition comprising the following components:
at least one polymerizable organic binder which has been dissolved in an organic solvent;
a polymerization initiator or crosslinking agent, respectively, which, via supply of light or heat, initiates the polymerization or crosslinking of the at least one polymerizable organic binder; and
at least one type of spherical quartz glass particles, which are present in dispersed form in the at least one polymerizable organic binder and have a diameter in the range from 7 to 100 nm;
(b) incompletely hardening the at least one polymerizable organic binder contained in the composition via spatially restricted supply of light or heat, whereby a green part is obtained as primary structure;
(c) separating the non-hardened at least one polymerizable organic binder, inclusive of the components contained therein, from the primary structure; and optionally at least once repeating the steps (a), (b) and (c);
(d) optionally post-treating the primary structure by at least one process selected from the group consisting of structuring by means of a forming tool, irradiating with high-energy radiation and subsequent developing, milling, drilling, laminating, bonding, grinding, polishing, lapping, engraving and treating with heat or laser light;
(e) removing a non-hardenable component potentially present in the primary structure;
(f) debinding the primary structure by thermal treatment, whereby a brown part is obtained as porous secondary structure;
(g) optionally filling up the porous secondary structure with at least one filler; and
(h) sintering the porous secondary structure, whereby the final molding is obtained.

2. The process according to claim 1, wherein the at least one polymerizable organic binder is a monoacrylate and/or a diacrylate.

3. The process according to claim 1 or 2, further comprising a non-hardenable component, which at room temperature is present in solid or in viscous liquid form.

4. The process according to any of claims 1 to 3, further comprising at least one second type of spherical quartz glass particles having a diameter in the range from 2 to 40 µm.

5. The process according to any one of claims 1 to 4, wherein removing the non-hardenable component potentially present in the primary structure in step (e) is carried out by thermal treatment at a temperature in the range from 50 to 300°C, by applying a reduced pressure or by solvent extraction.

6. The process according to any one of claims 1 to 5, wherein debinding the primary structure in step (f) is carried out at a temperature in the range from 200 to 700°C.

7. The process according to any one of claims 1 to 6, wherein sintering the porous secondary structure in step (h) is carried out at a temperature in the range from 700 to 1500°C and at a pressure of at most 0.1 mbar.

8. The process according to any of claims 1 to 7, wherein the at least one filler in step (g) is selected from the group consisting of inorganic pigments, silicon-based precursors and titanium-based precursors.

## Revendications

1. Procédé de fabrication d'un corps de moule en verre de quartz transparent, à haute pureté, comprenant les étapes suivantes :
(a) mise à disposition d'une composition pour la fabrication d'un corps de moule en verre de quartz transparent, à haute pureté, dans un dispositif, dans lequel la composition comprend les composants suivants :
au moins un liant organique polymérisable qui est dissout dans un solvant organique ;
un initiateur de polymérisation ou agent de réticulation qui initie par apport de lumière ou chaleur la polymérisation ou réticulation de l'au moins un liant organique polymérisable ; et
au moins un type de particules de verre de quartz sphériques qui sont présentes dans l'au moins un liant organique polymérisable sous forme dispersée et présentent un diamètre dans la plage de 7 à 100 nm ;
(b) durcissement incomplet de l'au moins un liant organique polymérisable contenu dans la composition par apport limité dans l'espace de lumière ou chaleur, moyennant quoi une ébauche de compact est obtenue en tant que structure primaire ;
(c) séparation de l'au moins un liant organique polymérisable non durci, y compris des composants contenus en son sein, de la structure primaire ; et éventuellement répétition au moins une fois des étapes (a), (b) et (c) ;
(d) éventuellement traitement postérieur de la structure primaire par au moins un procédé, sélectionné parmi le groupe constitué de structuration à l'aide d'un outil de moulage, irradiation avec un rayonnement hautement énergétique et développement, fraisage, perçage, laminage, agglomération, ponçage, polissage, rodage, gravure et traitement subséquent avec de la chaleur ou lumière laser ;
(e) élimination d'un composant non durcissable, éventuellement présent dans la structure primaire ;
(f) déliantage de la structure primaire par traitement thermique, moyennant quoi une seconde ébauche est obtenue en tant que structure secondaire poreuse ;
(g) éventuellement remplissage de la structure secondaire poreuse d'au moins une charge ; et
(h) frittage de la structure secondaire poreuse, moyennant quoi le corps de moule final est obtenu.

2. Procédé selon la revendication 1, dans lequel l'au moins un liant organique polymérisable est un monoacrylate et/ou un diacrylate.

3. Procédé selon la revendication 1 ou 2, comprenant en outre un composant non durcissable qui est présent à température ambiante sous forme solide ou sous forme visqueusement liquide.

4. Procédé selon une des revendications 1 à 3, comprenant en outre au moins un second type de particules de verre de quartz sphériques avec un diamètre dans la plage de 2 à 40 µm.

5. Procédé selon une des revendications 1 à 4, dans lequel l'élimination du composant non durcissable, éventuellement présent dans la structure primaire à l'étape (e) s'effectue par traitement thermique à une température dans la plage de 50 à 300 °C, par application d'une dépression ou par extraction de solvant.

6. Procédé selon une des revendications 1 à 5, dans lequel le déliantage de la structure primaire à l'étape (f) s'effectue à une température dans la plage de 200 à 700 °C.

7. Procédé selon une des revendications 1 à 6, dans lequel le frittage de la structure secondaire poreuse à l'étape (h) s'effectue à une température dans la plage de 700 à 1500 °C et à une pression de 0,1 mbar maximum.

8. Procédé selon une des revendications 1 à 7, dans lequel l'au moins une charge à l'étape (g) est sélectionnée parmi le groupe constitué de pigments inorganiques, précurseurs à base de silicium et précurseurs à base de titane.
